# EUROPEAN PATENT SPECIFICATION

(11) **EP 2 027 305 B1**
(45) Date of publication and mention of the grant of the patent: **05.05.2010**
(21) Application number: 06753910.6
(22) Date of filing: 26.05.2006
(51) Int. Cl.: C23C 24/04

(54) **METHOD FOR REPAIRING A DAMAGED OUTER SKIN REGION ON AN AIRCRAFT**
VERFAHREN ZUR REPARATUR EINES BESCHÄDIGTEN AUSSENHAUTBEREICHS AN EINEM FLUGZEUG
PROCÉDÉ DE RÉPARATION D'UNE RÉGION ENDOMMAGÉE DE REVÊTEMENT EXTERNE SUR UN AÉRONEF

(43) Date of publication of application: 25.02.2009
(73) Proprietor: Airbus Operations GmbH, 21129 Hamburg (DE)
(72) Inventor: ERDMANN, Wolfgang, 21614 Buxtehude (DE); ZÜNDORF, Eckehard, 53819 Neunkirchen- Seelscheid (DE)
(74) Representative: Kopf, Korbinian Paul
(86) International application number: PCT/EP2006/005054
(87) International publication number: WO 2007/137599

(56) References cited:
- EP-A- 1 674 595
- US-A1- 2002 066 770
- US-A1- 2003 190 414
- US-A1- 2004 101 620
- US-A1- 2006 093 736
- J. VLCEK ET AL: "Einsatzmöglichkeiten von Kaltgasgespritzten Schichten in der Luft und Raumfahrtindustrie" GALVANOTECHNIK, vol. 3, 2005, pages 684-699, XP001247456 Germany
- T.H. VAN STEENKISTE ET AL: "Aluminium Coatings via Kinetic Spray with Relatively Large Powder Particles" SURFACE AND COATINGS TECHNOLOGY, no. 154, 2002, pages 237-252, XP002396505 UK
- K. BALANI ET AL: "Transmission Electron Microscopy of Cold Sprayed 1100 Aluminium Coating" SCRIPTA MATERIALIA, no. 53, 2005, pages 845-850, XP002396506 USA

## Description

### Field of the invention:

The invention relates to a method for repairing a damaged outer skin region on an aircraft.

### Technological background:

With the industrially proven method variation of thermal spraying, the so-called "cold-gas spraying", the possibility exists of applying metal powder particles with supersonic speed onto a surface. The cold-gas spray relates to a coating technique, in which a material is not fused or melted on, in contrast to other spraying methods. The powder particles are accelerated in a heated gas flow to a predetermined particle speed and form a dense and adhesive layer upon impacting the substrate, based on its high kinetic energy. One may spray layers as well as thicker structures, for example, form pieces, with the method. In comparison to thermal spraying methods, the cold-gas spraying may be suited especially for spraying a coating of oxidation-sensitive materials, as disclosed for example in the U.S. Patent Application having the number US 2006/0093736 A1.

### Summary of the invention:

It is an object of the present invention to provide a solution for repairing a damaged layer on the outer skin of an aircraft, which takes into account the coating technology "cold-gas spraying" and which may be implemented without particular manual expense and without hull-damaging amounts in an environmentally friendly manner.

According to an exemplary embodiment of the present invention, a method for repairing a damaged outer skin region on an aircraft is provided, wherein the repair of a damage point takes place by using the cold spray coating technique, the method comprising the following steps:
a) directing, at constant distance (x), the pistol outlet to an application point, the application point being integrated in the damage point, and then
b) flowing a carrier gas through a second pistol-loading channel, the carrier gas being provided on a second pistol inlet and having a temperature of between 50° and 150°C which is performed in a controlled manner by the second pistol-loading channel, and next
c) flowing the carrier gas into the pistol-port channel, which because of the gas flow at the outlet of a first pistol-loading channel, produces a vacuum, then
d) flowing multiple aluminum powder particles, whose supply occurs at a first pistol input, through a first pistol-loading channel, which are suctioned as a result of a produced vacuum,
e) conducting the particles into the pistol-port channel and taking the particles by the gas flow of the carrier gas, thereupon
f) combining the detected powder particles with the gas flow of the carrier gas to a powder-particle-gas mixture, which flows through the pistol-port channel with a gas-particle speed (Vₚ), which lies between 500 m/s and 1000 m/s, and is released at the pistol outlet and is impinged on a substrate on the application point,
g) impinging of the powder particle-gas mixture on a substrate on the application point, such that upon impingement of the powder particles of the powder particle-gas mixture on the substrate, due to the kinetic energy of the particles at the application point, an adherent aluminum-like adhesion is implemented approximately in a punctiform manner or with a flat application,
h) spreading the adhesion to an aluminum layer as a result of a surface distributed movement of the pistol outlet over the area of the damage point, the movement extending over the damage point, until
i) the damage point is equalized with the aluminum layer, according to which
   - a particle composite of the aluminum powder particles is used with an approximately pure aluminum, which has a 90% to approximately 100% part aluminum,
   - the aluminum layer with multiple, uniformly-realized and adjacent aluminum aggregates is realized to a particle-dense and adhesive substrate-application, and
   - the distance (x), which is varied as a function of the dimensions of the surface to be repaired of the damage point, is tolerated from 6 cm to 30 cm, such that
   - a post-treatment time of the damage point because of insufficient adhering of the aluminum layer on the substrate is eliminated.

According to another exemplary embodiment of the present invention, the damage is related to localized damage points on a plated layer, the plated layer being applied on an outer skin and adapted for protecting the outer skin from corrosive damage, wherein the coating technique comprises cold-gas spraying with a cold-gas pistol, wherein the pistol has an internal structure including two inlet-side connected pistol-loading channels, which open into a pistol-port channel, which is arranged within a pistol barrel and is connected to a pistol outlet.

According to another exemplary embodiment of the present invention, the aluminum-like layer is realized according to step i) with a layer thickness of 0,01 mm to 5 mm.

According to another exemplary embodiment of the present invention, the aluminum powder particles of step d) are supplied with a particle size of 2 µm to 500 µm.

According to another exemplary embodiment of the present invention, the post-treatment time of the damage point is limited only to an aerodynamic compensation of the aluminum layer with the outer skin region of the aircraft, which is implemented by contraction of a coated aluminum layer region that is not planar with the outer skin by grinding of the excess aluminum-layer region.

According to another exemplary embodiment of the present invention, for compensation of the damage point, at least one or more aluminum layers are applied, which comprise a very small oxide portion and are adhered more densely than light-diffracting sprayed layers on the substrate.

According to another exemplary embodiment of the present invention, the method is be used for an appropriate repair of damaged regions on plated aircraft skin sheets, preferably for rebuilding of plated layers that protect from corrosion, for filling depressions and/or dents, for reinforcement of a damaged region with gradual transitions to undamaged regions, and for closing sources of cracks.

According to another exemplary embodiment of the present invention, the method is adapted for removing of all damages, whose appearance of damage is indicated by depressions on the outer skin of the aircraft, which preferably are visible by the effect of scratching.

According to an aspect of the present invention, a method is provided which may allow for repairing possible damage to a plated layer, which is adhered to the outer skin of a passenger aircraft and protects the latter in the undamaged state from corrosion. With it, the plated layer can be repeated in the area of existing damage without incidental reworking.

The use of a cold-gas spray technology for aircraft construction as well as corresponding specifications, which relate to technical process parameters to be observed, are not known from publications or in any other manner.

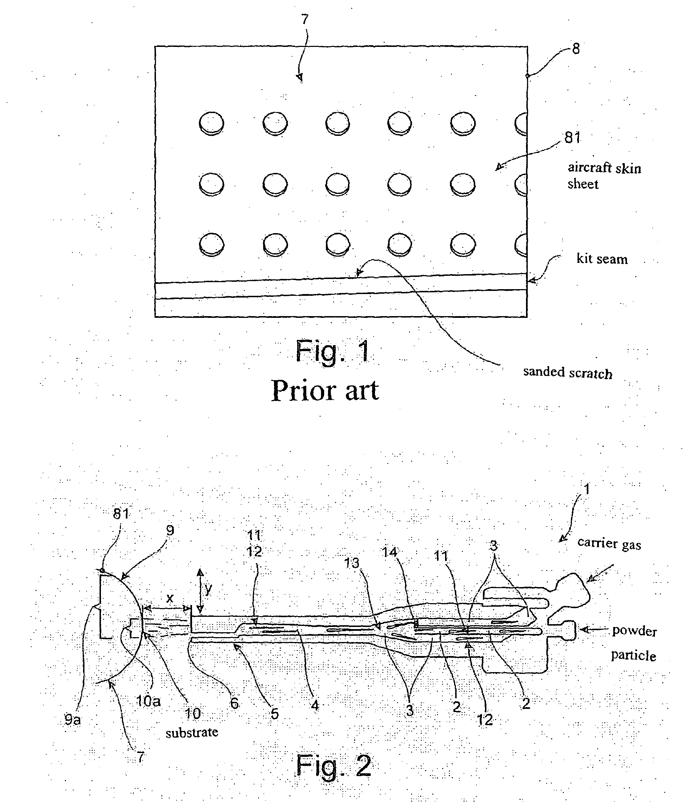

In contrast, with the structural assembly of a passenger aircraft, through error of different causes, damage to the outer skin, that is, damage to the layer application of the aircraft outer skin, may be observed. These errors may not be covered by cosmetic features and remain, therefore, with the running of a passenger aircraft, quite visible to the customer. Often, with damage in the form of scratches, the plated layer of pure aluminum that protects from corrosion is penetrated, which may lead to a substantial shortening of the longevity of the related aircraft component by corrosion. A treatment by sanding may expose further unplated components of the outer skin, as can be seen from attached Fig. 1. Therefore, a corresponding need exists in aircraft construction, to enable repair of outer skin damages, which appear in the form of scratches or dents or other caused destruction, subsequently with a quality layer-application.

### Short description of the drawings:

The invention is described in greater detail below with reference to an exemplary embodiment shown in the accompanying drawings. In the drawings:
Fig. 1 shows damage (scratch) treated by sanding in a plated layer adhered to the outer skin of an aircraft;
Fig. 2 shows the arrangement for performing the repair of a damage point of the plated layer with a cold-gas pistol.

### Detailed description of exemplary embodiments:

In Fig. 1, which is initially relied upon for better understanding of the invention, a coated aircraft skin sheet is shown (in plan view), which during the structural assembly (always for these reasons), a scratch is made on the plated layer 7. This damage point 9 on the outer skin 8 of a (here) passenger aircraft could be corrected only by sanding of the scratch. After completion of the repair, the plated layer 7 that protects from corrosion is grinded by a corresponding penetrating application. The unattractive appearance of the sanded scratch generally remains after the final lacquering of the aircraft, and therefore also is visible by the customers.

A better repair possibility for repairing a damaged outer skin region on an aircraft can be implemented by using the known coating technology "cold-gas praying", provided that the (subsequently described) technological specifications are adhered to in a disciplined manner. With this technology, whose modification (with each method described below) is made of interest for aircraft construction, the possibility exists for completing repair of damaged regions of plated aircraft skin sheets properly and with quality without particular expense. All criteria, which are relevant for a proper repair of a damaged outer skin region are implemented, of which
- the rebuilding of the plated layer that protects from corrosion,
- filling of depressions/dents by a functional layer (with cosmetic considerations),
- the reinforcement of the damaged region with easy transitions to undamaged regions,
- closing of the cracks
are to be considered.

A central repair, which is concerned with stopping the noted deficiencies according to the previously described method, would help prevent the occurrence of construction deviations, which are provided based on a permeated plated layer (according to the traditional repair methods), or at least limit them to a minimum.

According to an exemplary embodiment of the present invention, a method is provided, which may be used when damage of the outer skin region of an aircraft exists, which relates to localized (fixed) damage points 9 on the plated layer 7. The latter is fixedly applied on the outer skin 8 of the aircraft, which is exposed permanently to the effects of the aircraft surrounding environment for protection of any corrosive damage. If the repair of a damage point 9 according to Fig. 2 is necessary, a repair technology for repairing damaged outer skin regions on the aircraft is proposed, which deviates from traditionally used technologies. It is proposed to repair this damage point 9 by a modified use of the known coating technology "cold-gas spraying" with a cold-gas pistol 1. The cold-gas pistol 1 is equipped internally with first and second pistol-loading channels 2, 3, which are connected respectively with a pistol inlet. The first pistol-loading channel 2 is coated externally with powder particles 11, which are suctioned trough this channel as a result of a channel-outlet-side acting vacuum, which will be described in more detail below. The second pistol-loading channel 3 is supplied with a gas that is under pressure (as a carrier gas 10 for the power particles 11), which is pressed through this channel. Both channels 2, 3 are connected to an internally disposed pistol-port channel 4, into which both channels 2, 3 open. The pistol-port channel 4 is connected to a pistol outlet 6, which is retained in the direction of this outlet in a (approximately) horizontal orientation within a pistol barrel 5. This design of a cold-gas pistol 1 suited as a spraying pistol, which finds corresponding consideration in cold-gas spraying, is generally known among experts.

However, according to an aspect of the invention, the method, which can be used for repairing a damaged outer skin region, whose damaged plated layer 7 is to actually protect the aircraft structure from contemplated corrosion, comprises a modification, which relates to each subsequently described method step and may be used in aircraft construction. A series of tests that were performed eliminated any existing doubts with regard to the result of the exemplary embodiment.

With each (representation of an) arrangement (in a side view) according to Fig. 2 for performing the repair of a damage point of the plated layer 7, which is adhered to the outer skin 8 of the aircraft to provide protection from corrosion (again reconstructed), for example on an aircraft skin sheet, the possibility exists of technologically implementing the following steps (in the provided sequence). First (as simple as it also may appear), the pistol outlet 6 of each (previously described) cold-gas pistol 1 is directed to an application point 10, without permitting a release of gas movement thought the second pistol-loading channel 3, that is, through the pistol-port channel 4. A corresponding safety on the pistol, which is located in the secured state, is supplied during this handling for this purpose. Then, the cold-gas pistol 1, respectively the pistol barrel 5 (the pistol outlet 6) is directed onto the damage point 9 in a technologically prescribed distance x of constant length (if needed, with the support of a suitable pivoting or drivable support for holding the pistol).

Each embodiment is defined, such that in Fig. 2, such a damage point 9 of a damaged plated layer 7, which is adhered for example to a (here) inwardly bent aircraft skin sheet 81, on each bent sheet region of the aircraft skin sheet 81 that is referenced, is defined by a first clamp 9a. Since each damage point 9 possibly has multiple application points 10 for application of the sprayed material, a larger surface damage of the plated layer 7 exists, and in Fig. 2, at least one single application point 10 is shown, which is vertically limited on each bent sheet region of the aircraft skin sheet 81 by a second clamp 10a.

Depending on the surface of the damage point 9 to be repaired, the distance x (shown in Fig. 2) should be from 6 cm (with a small-surface damage region) up to 30 cm (with a large-surface damage region).

With regard to other features to be noted, which correlate with the definition of the distance x to be selected, the provided pressure of the supplied gas and the (adjustable or contant) nozzle shape of the pistol-port channel 4 on the pistol outlet 6 are to be noted, which effect the (wide- or narrow-surface or (approximately) punctiform) aggregate (design) of the sprayed material-application (of the coated powder particle application) on the damage point 9 or the application point 10.

With regard to each predefined end position of the cold-gas pistol 1, the securing of the gas supply to the cold-gas pistol 1 is eliminated, whereupon the (now designated) carrier gas 12 is flowed through a second pistol-loading channel 3 in a controlled manner, which after entry into the pistol-port channel 4 at the outlet 14 of the first pistol-loading channel 2, produces a respective vacuum (initial), by means of which suctioning of each available powder particle 11 through the first pistol-loading channel 2 occurs. Under these conditions, it is ensured that a controlled supply of multiple (dust-like) powder particles 11 of aluminum flowing through the first pistol-loading channel 2 takes place as well as a flowing through of the second pistol-loading channel 3 of the carrier gas 12, which has a temperature of approximately 100°C. Thereafter, the gas flow of the carrier gas 12, which is introduced at the outlet 13 of the second pistol-loading channel 3 into the pistol-port channel 4, the powder particles 11 are detected and absorbed from each powder particle flow, which then are combined with the gas flow, with a gas-particle speed V_{P} that lies between 500 m/s and 1000 m/s, leaves the pistol outlet 6 and is impinged onto a substrate on the application point 10, wherefore then upon impingement of the powder particles 11 onto the substrate, based on a higher kinetic energy of each powder particle 11 on the application point 10, for example in an approximate punctiform manner, an adhesive aluminum aggregate is applied. Then, if necessary, the adhered aluminum aggregate is applied as a particle-dense and adhesive substrate-application with an aluminum layer, which closes the damage point 9, as a result of a surface-distributed movement of the pistol outlet 6 over the area of the damage point 9 with additional (multiple) adjacent aluminum aggregates, which also are implemented according to the above-described steps. These features are implemented until the damage point 9 is evened out with the aluminum layer.

Each of the above-described features, according to which the proposed method for repairing a damaged outer skin region on an aircraft should be performed, are defined with further embodiments of these features. Thus, upon performing of the method, it should be taken into consideration that the noted aluminum layer, with which the damage point 9 is equalized, can be realized with a layer thickness of 0.01 mm to 5 mm.

The size of the dust-like powder particles 11 made from aluminum, which are supplied to the cold-gas pistol 1 and conducted through the channels 2, 4, and which leave the pistol outlet 6, are 2 µm to 500 µm. In addition, one should note that the temperature of the carrier gas 12, which is introduced into the second pistol-loading channel 3, has a temperature between 50°C and 150°C.

The method can be performed with an inert carrier gas 12, since other carrier gases that are useable for the powder particles 11 flowing with it, whose transport through the pistol-port channel 4 can be realized with the flow medium "gas" as the carrier (first), are not excluded. Thus, one would not expect any problems for example with a carrier gas that is available a (normal) compressed air.

As already explained, the powder particles 11 used have a particle composition with pure aluminum or almost pure aluminum. Thus, the particle composition of each powder particle 11 has a 90% to 100% portion of aluminum, whereby a use of powder particles, which can be realized with a preparation of dust-like particles from an aluminum alloy or another adhesive particle-component on the basis of an aluminum material, which can be fixedly adhered to the substrate, is not excluded.

A post-treatment time of the damage point 9 because of insufficient adhesion of the aluminum layer on the substrate is eliminated. A post-treatment of the damage point 9 is limited only to an aerodynamic leveling of the aluminum layer with the outer skin region of the aircraft, which is implemented by contraction of a coated aluminum layer region that is not planar to the outer skin 8 by sanding of the excess aluminum layer region.

Also, for equalizing the damage point 9, at least one (however also possibly more) aluminum layers can be applied, which are designated by a very minimal oxide portion and are adhered more densely as light-diffracting layers on the substrate.

Also, it should be noted that the outer skin 8 is heated during the performance of the method to not over 70°C.

The method explained above is used for a proper repair of damaged regions on plated aircraft-skin sheets, preferably for reconstruction of the plated layer 7 that protects from corrosion, for filling depressions and/or dents, for reinforcement of a damaged region with easy transition to undamaged regions, as well as for closing cracks.

Also, a use for eliminating all such damage is contemplated, whose type of damage is permeated depressions on the outer skin 8 of the aircraft, preferably visible by the affects of scratching.

In conclusion, a repair technology is proposed, which is suitable for repairing a damaged plated layer, whose surface-covering application should protect a metal structure from damaging corrosion. Upon spraying of pure aluminum according to the proposed method, which can be realized with each assembly of Fig. 2, the damage point of each plated layer is filled with at least one repair layer, as long as technologically prescribed processes and conditions are adhered to, at least at layer thickness of between 10 µm and 5 mm (or, with multiple layers placed on one another, still thicker layer thicknesses) can be realized. The layers applied according to these steps have a very minimal oxide portion and are applied more densely as light-diffracting layers.

A (central) repair of the damaged outer skin region (specialized) of a passenger aircraft according to the technology provided signifies time savings as well as the elimination of construction deviations, compared with common repair methods, which are employed based on a permeated plated layer 7.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### Reference numeral list

- 1: cold-gas pistol
- 2: pistol-loading channel, first
- 3: pistol-loading channel, second
- 4: pistol-port channel
- 5: pistol barrel
- 6: pistol outlet
- 7: plated layer
- 8: outer skin (of an aircraft)
- 9: damage point
- 9a: first clamp, vertical containment
- 10: application point
- 10a: second clamp, vertical containment
- 11: powder particle, dust-like
- 12: carrier gas; air, compressed air
- 13: outlet (of the second pistol-loading channel 3)
- 14: outlet (of the first pistol-loading channel 2)
- 15: pistol-inlet, first
- 16: pistol-outlet, second

- x: distance (pistol-outlet 6 - application point 10)
- y: movement direction (of the pistol-port channel 4)
- V_{P}: gas-particle speed

## Claims

1. Method for repairing a damaged outer skin region on an aircraft using a cold gas spraying technique, wherein the repair of a damage point takes place by using a coating technique, the method comprising the following steps:
a) directing, at constant distance (x), the pistol outlet to an application point, the application point being integrated in the damage point, and then
b) flowing a carrier gas through a second pistol-loading channel, the carrier gas being provided on a second pistol inlet and having a temperature of between 50°C and 150°C, which is performed in a controlled manner by the second pistol-loading channel, and next
c) flowing the carrier gas into the pistol-port channel, which because of the gas flow at the outlet of a first pistol-loading channel, produces a vacuum, then
d) flowing multiple aluminum powder particles, whose supply occurs at a first pistol input, through a first pistol-loading channel, which are suctioned as a result of a produced vacuum,
e) conducting the particles into the pistol-port channel and taking the particles by the gas flow of the carrier gas, thereupon
f) combining the detected powder particles with the gas flow of the carrier gas to a powder-particle-gas mixture, which flows through the pistol-port channel with a gas-particle speed (Vp), which lies between 500 m/s and 1000 m/s, and is released at the pistol outlet and is impinged on a substrate on the application point,
g) impinging of the powder particle-gas mixture on a substrate on the application point, such that upon impingement of the powder particles of the powder particle-gas mixture on the substrate, due to the kinetic energy of the particles at the application point, an adherent aluminum-like adhesion is implemented approximately in a punctiform manner or with a flat application,
h) spreading the adhesion to an aluminum layer as a result of a surface distributed movement of the pistol outlet over the area of the damage point, the movement extending over the damage point, until
i) the damage point is equalized with the aluminum layer, according to which
- a particle composite of the aluminum powder particles is used with an approximately pure aluminum, which has a 90% to 100% portion of aluminum,
- the aluminum layer with multiple, uniformly-realized and adjacent aluminum aggregates is realized to a particle-dense and adhesive substrate-application, and
- the distance (x), which is varied as a function of the dimensions of the surface to be repaired of the damage point, is tolerated from 6 cm to 30 cm, such that
- a post-treatment time of the damage point because of insufficient adhering of the aluminum layer on the substrate is eliminated.

2. The method of claim 1,
wherein the damage is related to localized damage points on a plated layer, the plated layer being applied on an outer skin and adapted for protecting the outer skin from corrosive damage;
wherein the coating technique comprises cold-gas spraying with a cold-gas pistol;
wherein the pistol has an internal structure including two inlet-side connected pistol-loading channels, which open into a pistol-port channel, which is arranged within a pistol barrel and is connected to a pistol outlet.

3. Method of claim 1, wherein the aluminum-like layer is realized according to step i) with a layer thickness of 0,01 mm to 5 mm.

4. Method of claim 1, wherein the aluminum powder particles of step d) are supplied with a particle size of 2 µm to 500 µm.

5. Method of claim 1, whose use is provided for an appropriate repair of damaged regions on plated aircraft skin sheets, preferably for rebuilding of plated layers that protect from corrosion, for filling depressions and/or dents, for reinforcement of a damaged region with gradual transitions to undamaged regions, and for closing sources of cracks.

6. Method of claim 5, adapted for removing of all damages, whose appearance of damage is indicated by depressions on the outer skin of the aircraft, which preferably are visible by the effect of scratching.

## Patentansprüche

1. Verfahren zum Reparieren eines beschädigten Außenhautbereiches an einem Flugzeug unter Verwendung einer Kaltgasspritztechnik, wobei die Reparatur einer Schadensstelle unter Verwendung einer Beschichtungstechnik stattfindet, wobei das Verfahren die folgenden Schritte aufweist:
a) Richten, bei konstantem Abstand (x), des Pistolenausgangs auf eine Auftragstelle, wobei die Auftragstelle in die Schadensstelle integriert ist, und dann
b) Verströmen eines Trägergases durch einen zweiten Pistolenladekanal, wobei das Trägergas an einem zweiten Pistoleneingang bereitgestellt wird und eine Temperatur von zwischen 50°C und 150°C aufweist, was in einer kontrollierten Weise durch den zweiten Pistolenladekanal durchgerührt wird, und als nächstes
c) Verströmen des Trägergases in den Pistolenmündungskanal, was aufgrund des Gasflusses an dem Auslass eines ersten Pistolenladekanals ein Vakuum erzeugt, dann
d) Verströmen mehrerer Aluminium-Pulver-Partikel, deren Bereitstellung an einem ersten Pistoleneingang erfolgt, durch einen ersten Pistolenladekanal, welche infolge des erzeugten Vakuums angesaugt werden,
e) Leiten der Partikel in den Pistolenmündungskanal und Erfassen der Partikel durch den Gasstrom des Trägergases, daraufhin
f) Kombinieren der erfassten Pulver-Partikel mit dem Gasstrom des Trägergases zu einem Pulver-Partikel-Gas-Gemisch, welches durch den Pistolenmündungskanal mit einer Gas-Partikel-Geschwindigkeit (Vₚ) strömt, die zwischen 500 m/s und 1000 m/s liegt, und am Pistolenausgang ausgegeben wird und auf ein Substrat an der Auftragstelle auftrifft,
g) Auftreffenlassen des Pulver-Partikel-Gas-Gemischs auf ein Substrat an der Auftragstelle derart, dass beim Auftreffen der Pulver-Partikel des Pulver-Partikel-Gas-Gemischs auf das Substrat aufgrund der kinetischen Energie der Partikel an der Auftragstelle eine anhaftende Aluminium-artige Ablagerung annähernd in einer Punkt-förmigen Weise oder mit einer flächigen Auftragung implementiert wird,
h) Verteilen der Ablagerung zu einer Aluminiumschicht aufgrund einer über die Oberfläche verteilten Bewegung des Pistolenausgangs über den Bereich der Schadensstelle, wobei sich die Bewegung über die Schadensstelle erstreckt, bis
i) die Schadensstelle mit der Aluminiumschicht ausgeglichen ist, wobei
- eine Partikelzusammensetzung der Aluminium-Pulver-Partikel verwendet wird mit einem näherungsweise reinen Aluminium, das einen Anteil von 90% - 100% von Aluminium aufweist,
- die Aluminiumschicht mit mehreren, gleichmäßig erzeugten und angrenzenden Aluminiumablagerungen zu einer Partikel-dichten und anhaftenden Substratauftragung realisiert wird, und
- der Abstand (x), der in Abhängigkeit des Ausmaßes der zu reparierenden Oberfläche der Schadensstelle variiert wird, innerhalb von 6 cm - 30 cm toleriert wird, so dass
- eine Nachbehandlungszeit der Schadensstelle aufgrund unzureichender Haftung der Aluminiumschicht an dem Substrat entfällt.

2. Verfahren nach Anspruch 1, wobei der Schaden eine lokalisierte Schadensstelle an einer plattierten Schicht betrifft, wobei die plattierte Schicht auf eine Außenhaut aufgebracht ist und zum Schützen der Außenhaut vor Korrosionsschaden ausgelegt ist;
wobei die Beschichtungstechnik Kaltgasspritzen mit einer Kaltgas-Pistole aufweist;
wobei die Pistole eine innere Struktur hat, die zwei Eingangs-seitig verbundene Pistolenladekanäle aufweist, die in einen Pistolenmündungskanal öffnen, der innerhalb einer Pistolentrommel angeordnet ist und mit einem Pistolenausgang verbunden ist.

3. Verfahren nach Anspruch 1, wobei die Aluminium-artige Schicht gemäß Schritt i) mit einer Dicke von 0,01 mm bis 5 mm ausgebildet ist.

4. Verfahren nach Anspruch 1, wobei die Aluminium-Pulver-Partikel aus Schritt d) mit einer Partikelgröße von 2 µm bis 500 µm bereitgestellt werden.

5. Verfahren nach Anspruch 1, dessen Verwendung für eine geeignete Reparatur von beschädigten Regionen eines plattierten Flugzeughautbleches eingesetzt wird, vorzugsweise zur Wiederherstellung von plattierten Schichten, die vor Korrosion schützen, zum Füllen von Vertiefungen und/oder Verwerfungen, zum Verstärken eines beschädigten Bereichs mit weichen Übergängen zu unbeschädigten Bereichen und zum Schließen von Rissinitiatoren.

6. Verfahren nach Anspruch 5, angewendet zum Beseitigen aller Schäden, deren Schadensform durch Vertiefungen an der Außenhaut des Flugzeuges indiziert sind, welche vorzugsweise durch eine Kratzwirkung sichtbar werden.

## Revendications

1. Procédé pour réparer une zone de revêtement extérieur endommagée sur un avion en utilisant une technique de pulvérisation de gaz froid, dans lequel la réparation d'un point d'endommagement a lieu en utilisant une technique d'enduction, le procédé comportant les étapes suivantes consistant à :
a) diriger, à distance constante (x), la sortie d'un pistolet vers un point d'application, le point d'application étant intégré dans le point d'endommagement, et ensuite
b) faire s'écouler un gaz porteur à travers un second canal de chargement de pistolet, le gaz porteur étant délivré sur une seconde entrée de pistolet et ayant une température comprise entre 50 °C et 150 °C, ledit écoulementgaz étant réalisé de manière commandée par le second canal de chargement de pistolet, et ensuite
c) faire s'écouler le gaz porteur dans le canal d'orifice de pistolet, ce qui, étant donné l'écoulement gazeux à la sortie d'un premier canal de chargement de pistolet, produit un vide, puis
d) faire circuler de multiples particules de poudre d'aluminium, dont l'alimentation s'effectue à une première entrée de pistolet, à travers un premier canal de chargement de pistolet, lesquelles particules sont aspirées en raison du vide produit,
e) guider les particules dans le canal d'orifice de pistolet et emmener les particules par l'intermédiaire de l'écoulement gazeux du gaz porteur, puis
f) combiner les particules de poudre détectées avec l'écoulement gazeux du gaz porteur en un mélange de particules de poudre et de gaz, lequel s'écoule à travers le canal d'orifice de pistolet à une vitesse de particules-gaz (Vp), qui se situe entre 500 m/s et 1 000 m/s, et est libéré à la sortie du pistolet et frappe un substrat sur le point d'application,
g) amener le mélange de particules de poudre et de gaz à frapper un substrat sur le point d'application, de telle sorte que lors de la frappe des particules de poudre du mélange sur le substrat, étant donné l'énergie cinétique des particules au point d'application, une adhérence analogue à de l'aluminium adhérent est mise en oeuvre approximativement de manière punctiforme ou avec une application à plat,
h) étendre l'adhérence jusqu'à une couche d'aluminium en résultat d'un mouvement réparti en surface de la sortie de pistolet au-dessus de l'aire du point d'endommagement, le mouvement s'étendant sur le point d'endommagement, jusqu'à ce que
i) le point d'endommagement soit égalisé avec la couche d'aluminium, procédé selon lequel
- un composite de particules constitué des particules de poudre d'aluminium est utilisé avec de l'aluminium sensiblement pur, qui a une proportion d'aluminium de 90 % à 100 %,
- la couche d'aluminium ayant de multiples agrégats d'aluminium adjacents et réalisés uniformément est réalisée jusqu'à une application substrat adhésive et dense en particules, et
- la distance (x), qui varie en fonction des dimensions de la surface à réparer du point d'endommagement, est tolérée de 6 cm à 30 cm, de telle sorte que
- un temps de post-traitement du point d'endommagement dû à une adhérence insuffisante de la couche d'aluminium sur le substrat, est éliminé.

2. Procédé selon la revendication 1,
dans lequel l'endommagement est associé à des points d'endommagement localisés sur une couche plaquée, la couche plaquée étant appliquée sur un revêtement extérieur et adaptée pour protéger le revêtement extérieur contre l'endommagement dû à la corrosion,
dans lequel la technique d'enduction comporte une pulvérisation de gaz froid à l'aide d'un pistolet à gaz froid,
dans lequel le pistolet a une structure interne incluant deux canaux de chargement de pistolet reliés côté entrée, qui débouchent dans un canal d'orifice de pistolet, qui est agencé à l'intérieur d'un fût de pistolet et est relié à une sortie de pistolet.

3. Procédé selon la revendication 1, dans lequel la couche analogue à de l'aluminium est réalisée conformément à l'étape i) avec une épaisseur de couche de 0,01 mm à 5 mm.

4. Procédé selon la revendication 1, dans lequel les particules de poudre d'aluminium de l'étape d) sont délivrées avec une taille de particule de 2 µm à 500 µm.

5. Procédé selon la revendication 1, dont l'utilisation est prévue pour une réparation appropriée de zones endommagées sur des tôles plaquées de revêtement d'avion, de préférence pour la reconstruction de couches plaquées qui protègent contre la corrosion, pour le remplissage de creux et/ou d'enfoncements, pour le renfort d'une zone endommagée avec des transitions graduelles jusqu'aux zones non endommagées, et pour la fermeture de sources de criques.

6. Procédé selon la revendication 5, adapté pour éliminer tous les endommagements, l'apparition de l'endommagement étant signalée par des creux sur le revêtement extérieur de l'avion, qui sont de préférence visibles par l'effet de rayage.
